# EUROPÄISCHE PATENTANMELDUNG

(11) **EP 1 547 869 A1**
(43) Veröffentlichungstag der Anmeldung: **29.06.2005**
(21) Anmeldenummer: 04029984.4
(22) Anmeldetag: 17.12.2004
(51) Int. Cl.: B60R 7/02, B60R 7/14, E05G 1/00

(54) **Sicherungsbehälter**

(30) Priorität: 24.12.2003 DE 20320036 U
(71) Anmelder: Wanischeck-Bergmann, Axel, Dipl.-Ing., 50968 Köln (DE)
(72) Erfinder: Wanischeck-Bergmann, Axel, Dipl.-Ing., 50968 Köln (DE)

(57) **Zusammenfassung**

Die Erfindung betrifft einen Sicherungsbehälter zur gegen unbefugte Entnahme gesicherten Befestigung im Gepäckraum eines Personenkraftwagens, bestehend aus einem Bodenelement (2) vier im wesentlichen rechtwinklig zum Bodenelement (2) angeordneten Seitenelementen (3) und einem Deckelelement (4) zum Abdecken einer Entnahmeöffnung. Um einen Sicherungsbehälter zu schaffen, der multifunktional verwendbar und insbesondere in eine Vielzahl von Personenkraftwagen einsetzbar sowie in einfacher Weise gegen Wegnahme befestigbar ist, wobei der Sicherungsbehälter kostengünstig herstellbar sein soll, ist vorgesehen, dass der Sicherungsbehälter eine Befestigungseinrichtung (15) vorsieht, die mit fahrzeugseitig montierten Befestigungsösen (14) verbindbar und innerhalb eines durch das Bodenelement (2), die Seitenelemente (3) und das Deckelelement (4) begrenzten Raum angeordnet ist, wobei das Bodenelement (2) und/oder zumindest zwei Seitenelemente Öffnungen in zumindest einer der Anzahl der Befestigungsösen (14) entsprechenden Anzahl aufweist bzw. aufweisen, die dem Eingriff der Befestigungsösen (14) in den Raum dienen.

## Beschreibung

Die Erfindung betrifft einen Sicherungsbehälter zur gegen unbefugte Entnahme gesicherten Befestigung im Gepäckraum eines Personenkraftwagens, bestehend aus einem Bodenelement, vier im wesentlichen rechtwinklig zum Bodenelement angeordneten Seitenelementen und einem Deckelelement zum Abdecken einer Entnahmeöffnung.

In Personenkraftwagen müssen oftmals Gegenstände transportiert werden, die gegen eine unbefugte Entnahme zu sichern sind. Beispielsweise ist der Transport von Jagdwaffen strengen gesetzlichen Regelungen unterworfen. Ein Transport einer Waffe ist ein Unterfall des Führens einer Waffe, wobei die Waffe nicht schussbereit und vor allem nicht zugriffsbereit befördert wird. Der Transport von Waffen erfolgt vielmals mit Personenkraftwagen. Gemäß den gesetzlichen Regelungen ist ein sicheres Verwahren von Waffen oder Munition in einem abgestellten Personenkraftwagen nicht gegeben, wenn dieses nur verschlossen ist. Sicher ist die Verwahrung erst dann, wenn sich der verschlossene Personenkraftwagen in einer ebenfalls verschlossenen Garage oder auf einem nicht zugänglichen Abstellplatz befindet. Als sicher gilt es auch, wenn der Personenkraftwagen verschlossen ist und unter ständiger Beobachtung steht und ein Diebstahl aufgrund der Nähe zum Personenkraftwagen jederzeit verhindert werden kann. Bereits das Bezahlen einer Tankrechnung nach einem Tankvorgang ist daher ist kritisch zu betrachten, da der Benutzer des Fahrzeuges nicht mehr seine volle Aufmerksamkeit dem Personenkraftwagen widmen kann. Deutlich kritischer wird die Situation bereits bei einem Toilettenbesuch auf einer Raststätte, bei dem der Personenkraftwagen für einen längeren Zeitraum unbeobachtet und Zugriffen Dritter ausgesetzt sein kann.

Aus dem Stand der Technik sind der Sicherungsbehälter bekannt, die seitens des Herstellers in entsprechende Personenkraftwagen fest eingebaut werden und der Aufnahme von Waffen und Munition dienen. Diese Sicherungsbehälter haben den Nachteil, dass sie sehr teuer und nicht aus dem Fahrzeug ausbaubar sind. Ferner schränken die fest eingebauten Sicherungsbehälter den für den Transport von Gepäck vorgesehenen Gepäckraum stark ein.

Es bestehen auch weitere Anforderungen bestimmte Gegenstände geschützt im Personenkraftwagen mitzuführen. Beispielsweise sind hochwertige fotooptische Ausrüstung von Fotografen oder Bildjoumalisten oftmals nur gegen hohe zusätzliche Versicherungsprämien in Personenkraftwagen versichert. Auch hier besteht ein Bedarf, eine entsprechende Transportmöglichkeit zu schaffen, die das Diebstahlrisiko reduziert.

Schließlich haben auch Urlaubsreisende ein erhöhtes Schutzbedürfnis gegen Wegnahme von Ausrüstungen aus einem geparkten Fahrzeug. Zu berücksichtigen ist hierbei die vermehrte Mitnahme von hochwertigen Sportausrüstungen, wie Golfausrüstungen, Tauchausrüstungen und dergleichen. Für diese Gegenstände reichen die von den Fahrzeugherstellem bereits werksseitig eingebauten Sicherungsbehälter unter einem Sitz oder unter dem Boden dem Gepäckraums nicht aus. Ferner weisen diese Sicherungsbehälter wiederum den Nachteil auf, dass sie nicht aus dem Personenkraftwagen entnommen werden können.

Es ist daher **Aufgabe** der Erfindung einen Sicherungsbehälter zu schaffen, der multifunktional verwendbar und insbesondere in eine Vielzahl von Personenkraftwagen einsetzbar sowie in einfacher Weise gegen Wegnahme befestigbar ist, wobei der Sicherungsbehälter kostengünstig herstellbar sein soll.

Die **Lösung** der Aufgabestellung sieht bei einem erfindungsgemäßen Sicherungsbehälter eine Befestigungseinrichtung vor, die mit fahrzeugseitig montierten Befestigungsösen verbindbar und innerhalb eines durch das Bodenelement, die Seitenelemente und das Deckelelement begrenzten Raum angeordnet ist, wobei das Bodenelement und/oder zumindest zwei Seitenelemente Öffnungen in zumindest einer der Anzahl der Befestigungsösen entsprechenden Anzahl aufweist bzw. aufweisen, die dem Eingriff der Befestigungsösen in den Raum dienen.

Der erfindungsgemäße Sicherungsbehälter nutzt somit in vorteilhafter Weise im Personenkraftwagen installierte oder in einfacher Weise nachrüstbare Befestigungsösen, die in den Raum zur Aufnahme der gegen Wegnahme zu schützenden Gegenstände eingreifen und über eine Befestigungseinrichtung mit dem Sicherungsbehälter verbunden werden. Derart gesichert ist eine Entnahme des Sicherungsbehälters nur von einer befugten Person durch öffnen eines das Deckelement verschließenden Schlosses möglich. Die Befestigung des Sicherungsbehälters im Personenkraftwagen ist darüber hinaus konstruktiv einfach und kann in einfacher und schneller Weise ein- bzw. ausgebaut werden, so dass bei Bedarf auch das gesamte Volumen des Gepäckraums nach Ausbau des Sicherungsbehälters genutzt werden kann.

Bei einer Weiterbildung der Erfindung ist vorgesehen, dass die Befestigungseinrichtung aus einem Spannelement und zwei am Spannelement endseitig angeordneten, in ihrem Abstand zueinander veränderbaren Hakenelementen besteht, wobei die Hakenelemente formschlüssig mit den Befestigungsösen verbindbar sind. Bei dieser Ausgestaltung, die konstruktiv einfach und effizient sowie preiswert herstellbar ist, werden zwei gegenüberliegend im Gepäckraum angeordnet Befestigungsösen mit einem im Aufnahmeraum angeordneten Spannelement verbunden. Das Spannelement besteht beispielsweise aus einem Gewindestab und endseitig angeordneten Spannschlössem, an denen Hakenelemente zum Eingriff in die Befestigungsösen befestigt sind. Über die Spannschlösser ist der Abstand der Hakenelemente zueinander und zur Gewindestange einstellbar, so dass das Einsetzen des Spannelementes in ausgezogen Stellung erfolgt und anschließend die Hakenelemente über die Spannschlösser aufeinander zu bewegt werden, um unter Spannung in die Befestigungsösen einzugreifen.

Bei einer bevorzugten alternativen Ausführungsform ist vorgesehen, dass die Befestigungseinrichtung aus zwei Spannelementen besteht, die jeweils ein endseitig angeordnetes Hakenelement aufweisen, wobei die Spannelemente relativ zu im Raum angeordneten Halterungen bewegbar und fixierbar sind. Die Hakenelemente werden bei dieser Ausführungsform mit gegenüberliegend angeordneten Befestigungsösen verrastet, woraufhin die Spannelemente in Richtung aufeinander zu bewegt werden, so dass der Sicherungsbehälter am vorgesehenen Platz verspannt ist.

Es ist weiterhin vorgesehen, dass die Halterungen im Abstand zueinander angeordnete Halteelemente aufweisen, die als mit dem Bodenelement verbundene oder verbindbare Platten ausgebildet sind und eine Bohrung zur Aufnahme des Spannelementes aufweisen. Bei dieser Ausbildung besteht die Möglichkeit, den Sicherungsbehälter lagegenau im Fahrzeug zu fixieren.

Eine Weiterbildung dieser Ausführungsform sieht vor, dass zumindest zwei Halteelemente eine Halterung bilden, wobei die Halteelemente beabstandet zueinander angeordnet und die Bohrungen in den Halteelementen koaxial und mit einem Innengewinde zur Aufnahme des als Gewindestange ausgebildeten Spannelementes ausgebildet sind. Diese Weiterbildung ist konstruktiv einfach und kann durch verfügbare Bauteile hergestellt werden. Über die Gewindestange ist ein Verspannen des Sicherungsbehälters in einer Vielzahl von Fahrzeug bei unterschiedlichen Befestigungsösen und deren Anordnung in einfacher Weise möglich.

Femer kann vorgesehen sein, dass die Halterung in einer Führung quer zur Längsachse des Raums verschiebbar angeordnet ist, wobei die Führung vorzugsweise als hinterschnittene Nut ausgebildet ist und die Halterung einen korrespondierenden Ansatz aufweist, der in die Führung einsetzbar ist. Diese Ausgestaltung dient der weitergehenden Anpassbarkeit der des Sicherungsbehälters an die unterschiedliche Anordnung und Ausgestaltung der Befestigungsösen.

Vorzugsweise ist das Deckelelement mit zumindest einem Seitenelement verriegel- und insbesondere verschließbar. Insbesondere sind an dem Seitenelement mehrere Ösen angeordnet, die im verriegelten und verschlossenen Zustand von an dem Deckelelement schwenkbeweglich angeordneten Laschen übergriffen und mit zumindest einem Schloss verschlossen werden. Mehrere Ösen und/oder Laschen können auch mit einem verschiebbaren Riegelelement verriegelt und mit einem Schloss verschlossen werden. Selbstverständlich kann das Schloss auch integraler Bestandteile des Deckelelementes und/oder des Seitenelementes sein.

Nach einem weiteren Merkmal der Erfindung ist vorgesehen, dass die Befestigungseinrichtung aus zumindest zwei im Raum verschwenkbaren Hakenelementen besteht, die in die Befestigungsösen einrastbar und mit diesen verriegelbar sind. Bei dieser Konstruktion der Befestigungseinrichtung, die kostengünstig herstellbar ist, ist eine schnelle Montage und Demontage insbesondere ohne Werkzeug möglich.

Eine Weiterbildung der Erfindung sieht vor, dass die Öffnungen gegenüberliegend im Bodenelement und angrenzend in dem zugehörigen Seitenelement angeordnet sind und sich über zumindest die Hälfte der Länge des Seitenelementes erstrecken. Zum eine ist bei dieser Ausgestaltung sichergestellt, dass der Boden des Sicherungsbehälters auf dem Boden des fahrzeugseitigen Gepäckraums möglichst vollflächig aufliegt, auch wenn die Befestigungsösen über den Boden des Gepäckraums hervorstehen und von dem Sicherungsbehälters abgedeckt sind. Femer hat die erfindungsgemäße Länge der Öffnungen den Vorteil der leichten Anpassung des Sicherungsbehälters an unterschiedliche Anordnungen der Befestigungsösen in verschiedenen Fahrzeugen.

Um einen möglichen Zugriff in das Innere des Sicherungsbehälters bei einer Ausführung mit langen Öffnungen zu erschweren ist nach einem weiteren Merkmal der Erfindung vorgesehen, dass die Öffnungen mit einem verschiebbaren Plattenelement abgedeckt sind, das mehrere Langlöcher aufweist, in die die Hakenelemente einsteckbar sind, um mit den Befestigungsösen zu verrasten. Durch diese Ausgestaltung wird der Sicherungsbehälter an die Anordnung der Befestigungsösen angepasst und der Zugriff von außen durch das Plattenelement erschwert.

Vorzugsweise ist vorgesehen, dass der Raum mit einem flexiblen Element ausgefüllt ist, welches herausnehmbar ist, die Befestigungseinrichtung abdeckt und in seiner Oberfläche an die Konturen von im Raum aufzubewahrenden Gegenständen, wie insbesondere Lang- und Kurzwaffen, Fotooptische Geräte, Gefahrstoffbehälter oder dergleichen anpassbar ist. Ein derartiges Element dient dem sicheren Transport der Gegenstände, die formschlüssig in dem Element gelagert werden.

Eine Weiterbildung dieser Ausführungsform sieht vor, dass das flexible Element eine Armierung aufweist und mit zumindest den Seitenelementen verbindbar ist. Die Armierung, welche beispielsweise auf den Außenflächen des Elements angeordnet, insbesondere aufgeklebt ist, erhöht die sichere Aufbewahrung der Gegenstände, da das aus einem flexiblen Material bestehende Element über die Armierung geschützt ist. Die Armierung kann aber auch alternativ oder ergänzend als flächiges Element in das flexible Element derart integriert sein, das es parallel zu den großen Hauptflächen des flexiblen Elementes verläuft.

Nach einem weiteren Merkmal ist vorgesehen, dass die Seitenelemente, das Bodenelement und/oder das Deckelelement aus vergütetem Stahl, Aluminium oder faserarmiertem Kunststoff bestehen. Diese Materialien haben sich hinsichtlich ihrer Sicherheit gegen Zerstörung, ihrer Korrosionsbeständigkeit sowie hinsichtlich ihres geringen Gewichtes als vorteilhaft erwiesen.

Um die Zugriffssicherheit weiter zu erhöhen ist schließlich vorgesehen, dass die Seitenelemente und das Bodenelement einstückig miteinander ausgebildet sind.

Weitere Merkmale und Vorteile der Erfindung ergeben sich aus der nachfolgenden Beschreibung der zugehörigen Zeichnung, in der eine bevorzugte Ausführungsform der Erfindung dargestellt ist. In der Zeichnung zeigen:
- Figur 1: einen Sicherungsbehälter in perspektivischer Ansicht;
- Figur 2: eine Befestigungseinrichtung für den Sicherungsbehälter gemäß Figur 1 in einer Draufsicht;
- Figur 3: einen Abschnitt der Befestigungseinrichtung gemäß Figur 2 in einer Ansicht;
- Figur 4: einen Abschnitt eines in den Sicherungsbehälter einsetzbaren flexiblen Elementes in einer ersten Ausführungsform in einer Seitenansicht;
- Figur 5: eine Abschnitt eines in den Sicherungsbehälter einsetzbaren flexiblen Elementes in einer zweiten Ausführungsform in einer Seitenansicht,
- Figur 6: einen Abschnitt des Innenraums des Sicherungsbehälters in einer Draufsicht;
- Figur 7: eine zweite Ausführungsform einer Befestigungseinrichtung in Seitenansicht und
- Figur 8: einen Ausschnitt eines Bodenelementes mit einem Teil der Befestigungseinrichtung gemäß Figur 7.

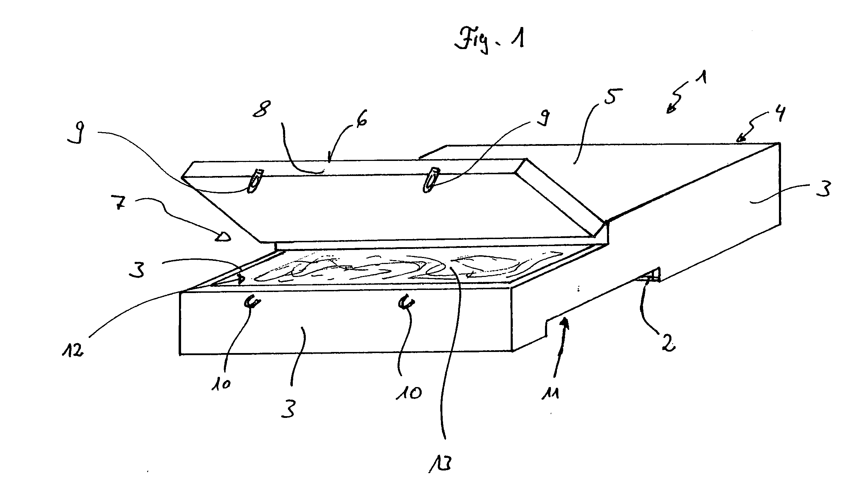

Figur 1 zeigt einen Sicherungsbehälter 1 zur gegen unbefugte Entnahme gesicherten Befestigung im Gepäckraum eines nicht näher dargestellten Personenkraftwagens. Der Sicherungsbehälter 1 besteht aus einem Bodenelement 2 und vier rechtwinklig zum Bodenelement 2 angeordneten Seitenelementen 3, von denen in Figur 1 zwei Seitenelement 3 dargestellt sind. Die Seitenelemente 3 sind wiederum zueinander rechtwinklig angeordnet, so dass das Bodenelement 2 und die Seitenelemente 3 einen quaderförmigen Sicherungsbehälter 1 ausbilden.

Dem Bodenelement 2 gegenüberliegend angeordnet und zum Bodenelement 2 parallel verlaufend ausgerichtet ist ein zweiteiliges Deckelement 4 angeordnet, welches aus einem Abschnitt 5 besteht, der fest mit den Seitenelementen 3 verbunden ist. Ein zweiter Abschnitt 6 ist als Klappe ausgebildet und am ersten Abschnitt 5 scharniert. Der zweite Abschnitt 6 verschließt eine Öffnung 7 und weist an seiner Vorderkante 8 zwei Schließelemente 9 auf, die als Überwurffallen mit im Bereich des vorderen Seitenelementes 3 angeordneten Bügeln 10 zusammenwirken und beispielsweise mit einem Vorhängeschloss verriegelbar sind.

Die seitlichen Seitenelemente 3 und das Bodenelement 2 weisen Öffnungen 11 auf, die in den Seitenelementen 3 und dem Bodenelement 2 identisch ausgebildet und gegenüberliegend angeordnet sind.

Ferner ist aus Figur 1 zu erkennen, dass die Seitenelemente 3, das Bodenelement 2 und das Deckelelement 4 einen Raum 12 begrenzen, in den ein nachfolgend noch zu beschreibendes flexibles Element 13 eingesetzt ist.

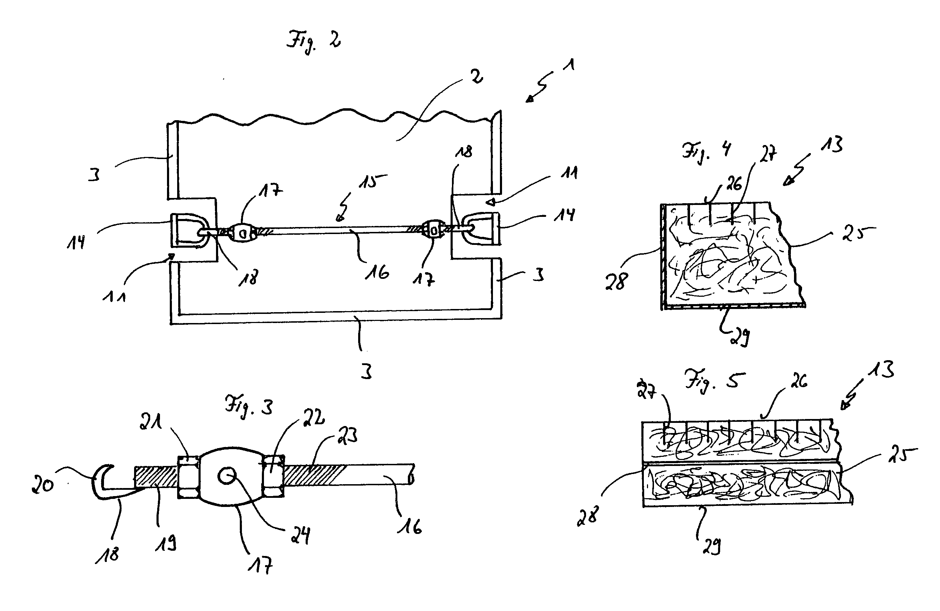

Die voranstehend bereits erwähnten und in der Figur 2 deutlicher zu erkennenden Öffnungen 11 dienen der Aufnahme von fahrzeugseitig vorgesehen bzw. fahrzeugseitig befestigten Befestigungsösen 14, die gemäß Figur 2 mit einer Befestigungseinrichtung 15 miteinander verbindbar sind, wobei sich die Befestigungseinrichtung 15, die beiden Befestigungsösen 14 miteinander verbindend durch den Raum 12 des Sicherungsbehälters 1 erstreckt. Die Befestigungsösen 14 liegen hierbei annähernd vollständig innerhalb des durch die Seitenelemente 3 begrenzten Raumes 12, so dass sie von außen nur erschwert zugänglich sind.

Die Befestigungsösen 14 sind in der Regel schwenkbeweglich im nicht näher dargestellten Gepäckraum des Fahrzeuges angeordnet. Oftmals sind die Befestigungsösen 14 in entsprechenden Ausnehmungen angeordnet, so dass sich ein glattflächiger Boden des Gepäckraumes ergibt.

Die Befestigungseinrichtung 15 besteht aus einem zumindest an seinen Enden als Gewindestange ausgebildeten Stab 16 sowie auf die Enden aufgeschraubte Spannelemente 17 und über die Spannelemente 17 mit dem Stab 16 verbundene Hakenelemente 18. Jedes Hakenelement 18 weist einen Gewindeabschnitt 19 und einen Haken 20 auf, der in eine Befestigungsöse 14 einhakbar ist.

Der Gewindeabschnitt 19 ist in eine erste Mutter 21 einschraubbar, die an einem Ende des Spannelementes 17 angeordnet ist. Eine zweite Mutter 22 ist am gegenüberliegenden Ende des Spannelementes 17 angeordnet und nimmt das einen Gewindeabschnitt 23 aufweisende Ende des Stabes 16 auf. In dem Spannelement 17 ist zumindest eine Durchgangsbohrung 24 angeordnet, die der Aufnahme eines nicht näher dargestellten Stiftes als Werkzeug zum Verdrehen des Spannelementes relativ zum Hakenelement 18 bzw. Stab 16 dient. Anstelle eines derartigen, nicht näher dargestellten Stiftes kann die erforderliche Verdrehung des Spannelementes 17 auch mittels eines üblichen Maulschlüssels erfolgen, der auf eine der beiden Muttern 21 bzw. 22 aufsetzbar ist. Zu diesem Zweck weisen die Muttem 21 bzw. 22 in an sich üblicherweise Schlüsselflächen auf.

Bei der Montage der Befestigungseinrichtung 15 wird die Befestigungseinrichtung 15 in einer entspannten Stellung mit den gegenüberliegend angeordneten Befestigungsösen 14 derart verbunden, dass die Haken 20 in die Befestigungsösen 14 eingreifen. Anschließend wird über die Spannelemente 17 die Länge der Befestigungseinrichtung 15 derart verkürzt, dass die Befestigungseinrichtung 15 mit den Befestigungsösen 14 verspannt ist. Die Spannelemente 17 liegen innerhalb des Raumes 12, so dass sie nur nach Öffnen des zweiten Abschnitts 6 des Deckelementes 4 zugänglich und damit manipulierbar sind. Die Befestigungseinrichtung 15 kann hierbei innerhalb des nachfolgend noch zu beschreibenden flexiblen Elementes 13 angeordnet sein, so dass sie von außerhalb des Sicherungsbehälters 1 weder sichtbar noch erreichbar ist.

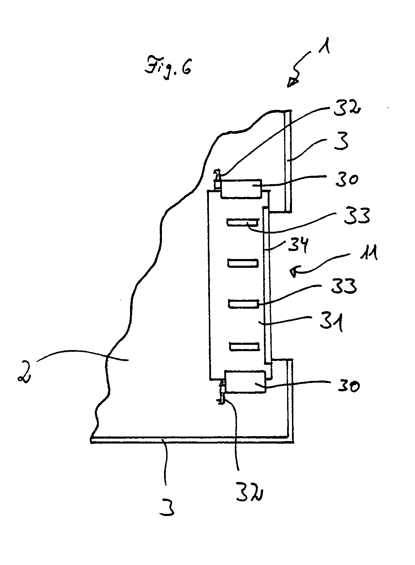

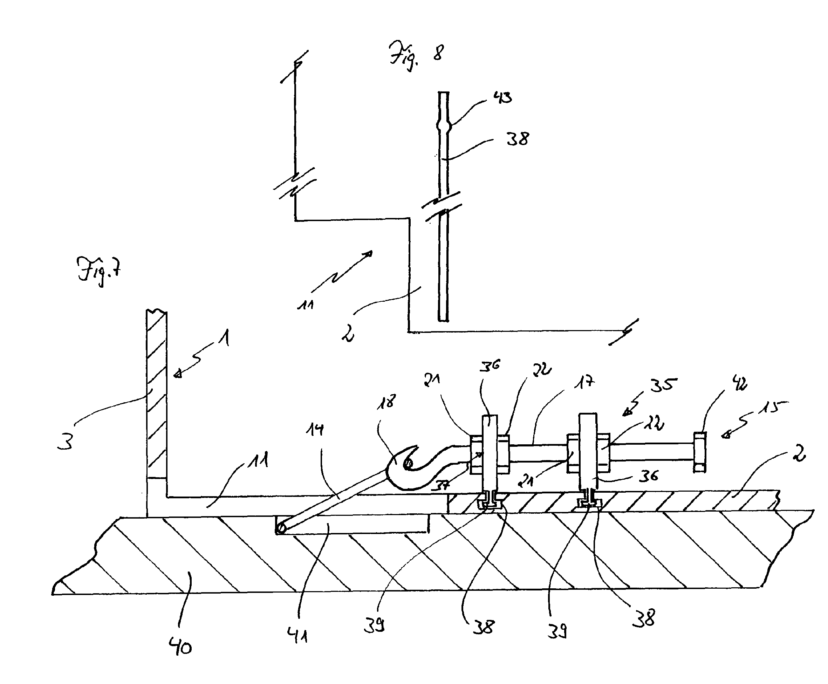

Die Ausführungsformen des flexiblen Elementes 13 sind in den Figuren 4 und 5 dargestellt. Das flexible Element 13 besteht aus einem quaderförmigen Schaumstoffelement 25, welches beispielsweise im Bereich einer Oberfläche 26 durch rechtwinklig zueinander verlaufende Einschnitte 27 in einzelne quaderförmige Elemente unterteilt ist, die entsprechend einer Kontur eines in dem Sicherungsbehälter 1 aufzubewahrenden Gegenstandes, beispielsweise von Lang- und/oder Kurzwaffen, fotooptischen Geräten, Gefahrstoffbehältem oder dergleichen aus dem flexiblen Element 13 herausgetrennt werden können. Das Schaumstoffelement 25 kann demzufolge in einfacher Weise an die Kontur dieses Gegenstandes angepasst werden.

Außenliegend weist das Schaumstoffelement 25 eine Armierung 28 auf, die beispielsweise aus Kunststoff- oder Metallplatten besteht, die an den Seitenwandungen und einer der Oberfläche 26 gegenüberliegenden Oberfläche 29 des Schaumstoffelementes 25 befestigt, insbesondere verklebt sind, sodass ihre Bereiche gegen einen Angriff mit einem Werkzeug geschützt sind.

Alternativ und/oder ergänzend kann das Schaumstoffelement 25 eine Armierung 28 aufweisen, die als flächiges Element innerhalb des Schaumstoffelementes 25 derart angeordnet ist, dass sie sich parallel zu den großen Oberflächen 26 bzw. 29 erstreckt.

In Figur 6 ist eine Weiterbildung des Sicherungsbehälters 1 dargestellt. Im Bereich der Öffnungen 11, von denen in der Figur 6 lediglich eine dargestellt ist, weist das Bodenelement 2 zwei seitlich der Öffnung 11 gegenüberliegend angeordnete Führungselemente 30 auf, zwischen denen ein Plattenelement 31 verschiebbar gelagert ist. Das Plattenelement ist beidseitig im Bereich der Führungselemente 30 durch Schlösser 32 arretierbar und hat in gleichmäßigen Abständen über seine Länge verteilt angeordnete Ausschnitte 33, die der Aufnahme des Hakens 20 des Hakenelementes 18 dienen, wobei der Haken 20 einen Ausschnitt 33 durchgreift und unterhalb des Plattenelementes 31 mit einer Befestigungsöse 14 verhakbar ist.

Das Plattenelement 31 bietet den Vorteil, dass die Öffnung 11 sich über einen größeren Längenbereich des Seitenelements 3 bzw. des Bodenelements 2 erstrecken kann und damit für eine Vielzahl von unterschiedlichen Anordnungen der Befestigungsösen 14 im Gepäckraum eines Fahrzeuges verwendbar ist, ohne dass für jeden Fahrzeugtyp eine darauf abgestimmte Ausgestaltung des Sicherungsbehälters 1 notwendig ist.

Das Plattenelement 31 deckt hierbei im montierten Zustand des Sicherungsbehälters 1 die Öffnung 11 ab, so dass der Zugriff auf den Innenraum des Sicherungsbehälters 1 erschwert ist. Ergänzend kann das Plattenelement 31 ein parallel zur Flächennormalen des Plattenelementes 31 verlaufendes Stehblech 34 aufweisen, welches auch die Öffnung 11 im Bereich des Seitenelementes 3 abdeckt.

Der Sicherungsbehälter 1 kann hinsichtlich der Seitenelemente 3, des Bodenelementes 2 und des Abschnitts 5 des Deckelelementes 4 einstückig aus Kunststoff, insbesondere faserarmiertem Kunststoff ausgebildet sein. Alternativ bestehen die Seitenelemente 3, das Bodenelement 2 und das Deckelement 4 des Sicherungsbehälters 1 aus Metall, nämlich aus vergütetem Stahl, Aluminium oder einem Materialkomposit aus den voranstehend genannten Metallen und/oder Kunststoff. Wird der Sicherungsbehälter 1 aus Metall ausgebildet, so hat es sich als vorteilhaft erwiesen, Seitenelemente 3 und Bodenelemente 2 einstückig miteinander auszubilden und den Abschnitt 5 des Deckelementes 4 in ein derartiges Unterteil einzuschweißen.

Neben der in Figur 1 dargestellten Verschlusseinrichtung, bestehend aus den Schließelementen 9 und den Bügeln 10, können selbstverständlich andere Verschlusseinrichtungen, wie beispielsweise übliche Schlosssysteme mit bekannten Schließzylindem und Riegelsteuerungen vorgesehen sein. Weiterhin sind alternative Befestigungseinrichtungen 15 denkbar, die beispielsweise eine Einzelverbindung der Befestigungsösen 14 mit jeweils einer im Bereich eines Seitenelementes 3 angeordneten Befestigungseinrichtung 15 vorsehen.

Figur 7 zeigt eine zweite Ausführungsform einer Befestigungseinrichtung 15 in Seitenansicht. Der Sicherungsbehälter 1 ist mit seinem Bodenelement 2 auf einem Fahrzeugboden 40 angeordnet, wobei die Öffnung 11 oberhalb einer Vertiefung 41 im Fahrzeugboden 40 angeordnet ist. In der Vertiefung 41 ist die Befestigungsöse 14 schwenkbeweglich angeordnet, wobei die Befestigungsöse 14 vollständig in der Vertiefung 41 aufgenommen ist, soweit die Befestigungsöse 14 nicht zur Befestigung von Ladegut oder des Sicherungsbehälters 1 verwendet ist.

Die Befestigungseinrichtung 15 besteht aus zwei im Abstand zueinander angeordneten Halteelementen 36, die zusammen mit dem Spannelement 17 eine Halterung 35 bilden. Das Spannelement 17 ist als Gewindestange ausgebildet und weist an seinem einen, der Öffnung 11 des Sicherungsbehälters 1 zugewandten Ende ein Hakenelement 18 und an seinem zweiten, gegenüberliegenden Ende einen Schlüsselansatz 42 auf.

Das Spannelement 17 durchgreift zwei Bohrungen 37, die koaxial ausgerichtet in den Halteelementen 36 angeordnet sind. Beidseitig der Halteelemente 36 trägt das Spannelement 17 Muttern 21 bzw. 22, mit denen das Spannelement 17 relativ zu den Halteelementen 36 fixierbar ist. Durch die Anordnung der Muttern 21, 22 beidseitig jeweils eines Halteelementes 36 kann das Spannelement 17 durch gegenläufige Drehungen der Muttern 21, 22 an den Halteelementen 36 verspannt werden.

Im Bereich ihrer dem Bodenelement 2 zugewandten Aufstandsflächen weisen die Halteelemente 36 Ansätze 39 auf, die im Querschnitt T-förmig ausgebildet sind und die in Führungen 38 eingreifen, welche als hinterschnitten ausgebildete Nuten ausgebildet sind. Hierbei entsprechen die Ansätze 39 mit ihrer Außenkontur im Wesentlichen der Innenkontur der Führungen 38, so dass eine formschlüssige Führung der Ansätze 39 in den Führungen 38 gegeben ist.

Die Führungen 38 sind entsprechend Figur 8 im Bereich des Bodenelementes 2 angeordnet, wobei sich die Führungen 38 quer zur Längsachse des Raumes 12 im Sicherungsbehälter 1 erstrecken.

Jede Führung 38 weist einen erweiterten Bereich 43 auf, dessen Größe und Ausgestaltung auf die Form des Ansatzes 39 eingestellt ist, so dass der Ansatz 39 problemlos in den erweiterten Bereich 43 eingesetzt und anschließend in die Führung 38 eingeschoben werden kann. Der erweiterte Bereich 43 kann ergänzend mit einem nicht näher dargestellten Stopper verschlossen werden, so dass ein Herausnehmen des Ansatzes 39 aus der Führung 38 erst nach Entnahme des Stoppers möglich ist.

Durch die Verspannung des Spannelementes 17 an den Halteelementen 36 werden diese aufeinander zu bewegt und ebenfalls in den Führungen 38 verspannt. Die Führungen 38 dienen der Einstellung der Befestigungseinrichtung 15 relativ zu den Befestigungsösen 14, die bei unterschiedlichen Fahrzeugen in unterschiedlichen Bereichen angeordnet sind.

Die in Figur 7 dargestellte Befestigungseinrichtung 15 ist spiegelbildlich im Bereich einer zweiten Öffnung 11 des Bodenelementes 2 angeordnet. Ergänzend können zwei weitere Befestigungseinrichtungen 15 vorgesehen sein, die dann mit insgesamt vier Befestigungsösen 14 zusammenwirken.

## Patentansprüche

1. Sicherungsbehälter zur gegen unbefugte Entnahme gesicherten Befestigung im Gepäckraum eines Personenkraftwagens, bestehend aus einem Bodenelement (2), vier im wesentlichen rechtwinklig zum Bodenelement (2) angeordneten Seitenelementen (3) und einem Deckelelement (4) zum Abdecken einer Entnahmeöffnung und einer Befestigungseinrichtung (15), die mit fahrzeugseitig montierten Befestigungsösen (14) verbindbar und innerhalb eines durch das Bodenelement (2), die Seitenelemente (3) und das Deckelelement (4) begrenzten Raum (12) angeordnet ist, wobei das Bodenelement (2) und/oder zumindest zwei Seitenelemente (3) Öffnungen (11) in zumindest einer der Anzahl der Befestigungsösen (14) entsprechenden Anzahl aufweist bzw. aufweisen, die dem Eingriff der Befestigungsösen (14) in den Raum (12) dienen.

2. Sicherungsbehälter nach Anspruch 1,
**dadurch gekennzeichnet,**
**dass** die Befestigungseinrichtung (15) aus zumindest einem Spannelement (17) und zwei am Spannelement (17) endseitig angeordneten, in ihrem Abstand zueinander veränderbaren Hakenelementen (18) besteht, wobei die Hakenelemente (18) formschlüssig mit den Befestigungsösen (14) verbindbar sind.

3. Sicherungsbehälter nach Anspruch 1,
**dadurch gekennzeichnet,**
**dass** die Befestigungseinrichtung (15) aus zwei Spannelementen (17) besteht, die jeweils ein endseitig angeordnetes Hakenelement (18) aufweisen, wobei die Spannelemente (17) relativ zu im Raum angeordneten Halterungen (35) bewegbar und fixierbar sind.

4. Sicherungsbehälter nach Anspruch 3,
**dadurch gekennzeichnet,**
**dass** die Halterungen (35) im Abstand zueinander angeordnete Halteelemente (36) aufweisen, die als mit dem Bodenelement (2) verbundene oder verbindbare Platten ausgebildet sind und eine Bohrung (37) zur Aufnahme des Spannelementes (17) aufweisen.

5. Sicherungsbehälter nach Anspruch 4,
**dadurch gekennzeichnet,**
**dass** zumindest zwei Halteelemente (36) eine Halterung (35) bilden, wobei die Halteelemente (36) beabstandet zueinander angeordnet und die Bohrungen (37) in den Halteelementen (36) koaxial und mit einem Innengewinde zur Aufnahme des als Gewindestange ausgebildeten Spannelementes (17) ausgebildet sind.

6. Sicherungsbehälter nach Anspruch 4,
**dadurch gekennzeichnet,**
**dass** die Halterung (35) in einer Führung (38) quer zur Längsachse des Raums (12) verschiebbar angeordnet ist, wobei die Führung (38) vorzugsweise als hinterschnittene Nut ausgebildet ist und die Halterung (35) einen korrespondierenden Ansatz (39) aufweist, der in die Führung (38) einsetzbar ist.

7. Sicherungsbehälter nach Anspruch 1,
**dadurch gekennzeichnet,**
**dass** das Deckelelement (4) mit zumindest einem Seitenelement (3) verriegel- und insbesondere verschließbar ist.

8. Sicherungsbehälter nach Anspruch 1,
**dadurch gekennzeichnet,**
**dass** die Befestigungseinrichtung (15) aus zumindest zwei im Raum (12) verschwenkbaren Hakenelementen besteht, die in die Befestigungsösen (14) einrastbar und mit diesen verriegelbar sind.

9. Sicherungsbehälter nach Anspruch 1,
**dadurch gekennzeichnet,**
**dass** die Öffnungen (11) gegenüberliegend im Bodenelement (2) und angrenzend in dem zugehörigen Seitenelement (3) angeordnet sind und sich über zumindest die Hälfte der Länge des Seitenelementes (3) erstrecken.

10. Sicherungsbehälter nach Anspruch 9,
**dadurch gekennzeichnet,**
**dass** die Öffnungen (11) mit einem verschiebbaren Plattenelement (31) abgedeckt sind, das mehrere Langlöcher (33) aufweist, in die die Hakenelemente (18) einsteckbar sind, um mit den Befestigungsösen (14) zu verrasten.

11. Sicherungsbehälter nach Anspruch 1,
**dadurch gekennzeichnet,**
**dass** der Raum (12) mit einem flexiblen Element (13) ausgefüllt ist, welches die Befestigungseinrichtung (15) abdeckt und in seiner Oberfläche (26) an die Konturen von im Raum (12) aufzubewahrenden Gegenständen, wie insbesondere Lang- und Kurzwaffen, fotooptische Geräte, Gefahrstoffbehälter oder dergleichen anpassbar ist.

12. Sicherungsbehälter nach Anspruch 11,
**dadurch gekennzeichnet,**
**dass** das flexible Element (13) eine Armierung (28) aufweist und mit zumindest den Seitenelementen (3) verbindbar ist.

13. Sicherungsbehälter nach Anspruch 1,
**dadurch gekennzeichnet,**
**dass** die Seitenelemente (3), das Bodenelement (2) und/oder das Deckelelement (4) aus vergütetem Stahl, Aluminium oder faserarmiertem Kunststoff bestehen.

14. Sicherungsbehälter nach Anspruch 1,
**dadurch gekennzeichnet,**
**dass** die Seitenelemente (3) und das Bodenelement (2) einstückig miteinander ausgebildet sind.
